# FASCICULE DE BREVET EUROPEEN

(11) **EP 2 795 165 B1**
(45) Date de publication et mention de la délivrance du brevet: **14.03.2018**
(21) Numéro de dépôt: 12806473.0
(22) Date de dépôt: 20.12.2012
(51) Int. Cl.: F16J 15/00

(54) **DRAIN POUR MONTAGE D'ÉTANCHÉITÉ DYNAMIQUE**
ABLAUF FÜR DYNAMISCHE DICHTUNGSANORDNUNG
DRAIN FOR DYNAMIC SEALING ASSEMBLY

(30) Priorité: 21.12.2011 FR 1162207
(43) Date de publication de la demande: 29.10.2014
(73) Titulaire: Poclain Hydraulics Industrie, 60410 Verberie (FR)
(72) Inventeur: VIDAL, Stéphane, F-60410 Verberie (FR); GRILLON, Gilles, F-60410 Verberie (FR); BONNOMET, Bertrand, F-60410 Verberie (FR); MULOT, Jérémie, F-60410 Verberie (FR)
(74) Mandataire: Regimbeau
(86) Numéro de dépôt international: PCT/EP2012/076385
(87) Numéro de publication internationale: WO 2013/092863

(56) Documents cités:
- EP-A1- 1 602 832
- DE-A1- 10 319 821
- DE-A1-102009 014 214

## Description

### DOMAINE TECHNIQUE GENERAL

La présente invention concerne le domaine des appareils hydrauliques munis d'un joint dynamique.

Plus précisément, elle concerne un dispositif adapté pour supporter des pointes de pression dans le carter d'un appareil hydraulique, comprenant des moyens permettant d'évacuer les fuites d'un tel dispositif.

Par appareil hydraulique on entend par exemple un moteur hydraulique, une pompe hydraulique ou un frein hydraulique, ou encore la combinaison de plusieurs de ces appareils.

### ETAT DE L'ART

Pour un appareil hydraulique monté sur un arbre, en particulier dans le cas d'un arbre fixe sur lequel est monté un moteur à carter tournant entrainant une roue, il est nécessaire d'avoir une étanchéité du côté de l'arbre ; par exemple une étanchéité de type huile/air dans le cas d'un moteur de transmission hydrostatique faisant palier, ou de type huile/graisse dans le cas d'un moteur de transmission hydrostatique ajouté sous forme d'hydrobase sur un arbre portant déjà le palier de roue.
Le joint permettant de réaliser cette étanchéité doit avoir une bonne étanchéité durant le kilométrage attendu du moyeu (frottement, usure), ne pas fuir à la pression du carter et supporter les pics de pression de carter pour le système utilisant la pression de carter pour manoeuvrer des organes hydrauliques, par exemple les opérations de crabotage ou décrabotage des moteurs.

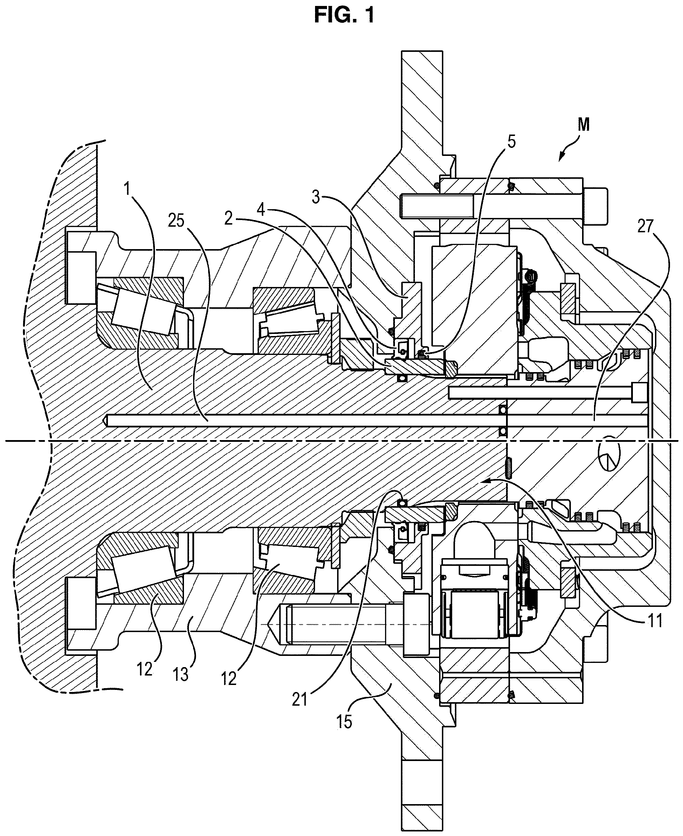

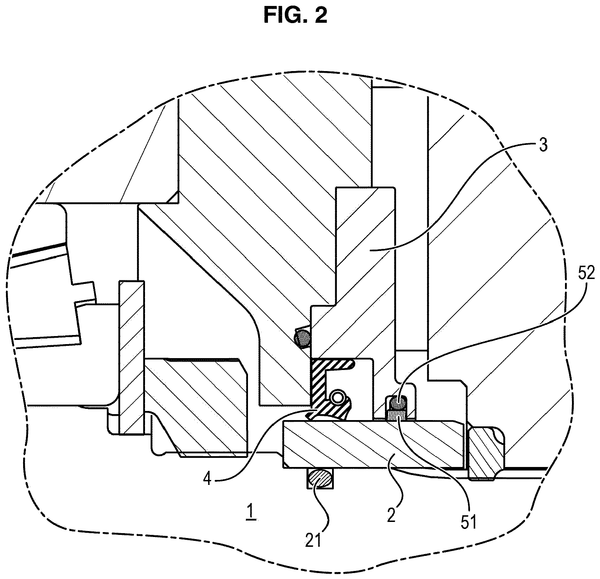

La figure 1 présente un exemple de système selon l'état de la technique, et la figure 2 présente une vue détaillée d'une portion de la figure 1.

Cette figure présente un arbre 1 présentant une extrémité proximale permettant par exemple de monter l'arbre pivotant par rapport à un essieu, et une extrémité distale 11 libre sur laquelle est monté un appareil hydraulique, ici un moteur hydraulique M. L'arbre 1 est muni d'un ou plusieurs roulements 12, ici deux roulement à rouleaux, disposés dans un carter de roulement 13. Un flasque 15 est fixé sur ce carter 13, ce flasque permettant la fixation d'une roue.

Une étanchéité est nécessaire entre le moteur hydraulique M et l'arbre 1, afin de maintenir et d'éviter de dégrader le lubrifiant, typiquement l'huile ou la graisse assurant la lubrification du moteur M ; cette étanchéité étant par exemple de type huile/air dans le cas d'un moteur de transmission hydrostatique faisant palier, ou de type huile/graisse dans le cas d'un moteur de transmission hydrostatique ajouté sur un arbre portant déjà le palier.
Fréquemment, dans le cas d'appareils hydrauliques ajoutés sur des essieux ou fusées de roue de véhicule, les arbres n'ont pas une dureté élevée, et ne peuvent donc pas supporter les frottements permanents d'un élément d'étanchéité dynamique monté directement sur l'arbre. Parfois également, le matériau ou le mode d'usinage ou de finition de ces arbres ne permet pas d'obtenir une piste de frottement de qualité suffisante pour garantir une durée de vie suffisante d'un joint dynamique sur sa surface de frottement, et plus précisément en ce qui concerne la qualité de l'état de surface : rugosité, défauts géométriques...
On ajoute donc dans ce cas une piste de frottement 2, communément appelée frette 2, c'est-à-dire une pièce réalisée dans un matériau ayant une dureté, une géométrie (dans le sens de circularité, rectitude) et un état de surface suffisants pour pouvoir réaliser une bonne portée de frottement. La frette 2 est alors montée serrée sur l'arbre 1, l'étanchéité étant assurée par un joint d'étanchéité statique 21, typiquement un joint torique.

Une bague porte joint 3 est montée autour de cette frette 2, sur le flasque 15, la bague porte joint 3 servant de support à un joint à lèvre 4 réalisant l'étanchéité dynamique à basse pression entre la frette 2 et la bague porte joint 3. Ainsi, lors de la rotation relative du moteur M par rapport à l'arbre 1 (ou inversement), la bague porte joint 3 tourne autour de la frette 2 et de l'arbre 1, et le joint à lèvres 4 n'est pas directement au contact de l'arbre 1, mais de la frette 2.
On parle d'étanchéité dynamique à basse pression pour le joint à lèvre 4 dans la mesure où ce type de composant n'est pas adapté pour résister à des pressions élevées, qui sont susceptibles de le déformer et de le faire sortir de son logement.

De tels montages comprennent en outre une étanchéité dynamique renforcée 5, formée par exemple d'un patin 51 et d'un joint torique 52, empilés sur la frette 2, ou le cas échéant directement sur l'arbre 1, et disposés dans un logement de la bague porte joint 3.
Cette étanchéité dynamique renforcée 5 est disposée de manière à empêcher que le joint à lèvres 4 ne soit directement exposé à un pic de pression dans le carter du moteur M ; elle est donc disposée entre le moteur M et le joint à lèvres 4, de manière à isoler ce joint à lèvres 4 par rapport au carter du moteur M.
Les pics de pressions peuvent se produire dans le carter du moteur M au cours du fonctionnement de celui-ci, et en particulier pour les moteurs ou l'on exerce volontairement une pression de carter définie à certains moments, par exemple pour les opérations de crabotage et de décrabotage. A cet effet, un orifice de drain communicant avec le carter du moteur est prévu. Pour le cas d'un moteur M monté sur un arbre comme représenté sur la figure 1, un canal aménagé dans l'arbre 1 et dans la contre-glace ; respectivement 25 et 27 fait communiquer le carter du moteur M avec un orifice de drain (non représenté), ici au travers de la contre-glace et de l'arbre 1.

Le patin 51 est réalisé en matériau de frottement, et est maintenu au contact de la frette 2 par le joint torique 52, qui réalise pour sa part une étanchéité sans frottement avec la bague porte joint 3.

Une telle étanchéité dynamique renforcée 5 est bien connue de l'Homme de l'art, et est commercialisée sur des moteurs de la marque Poclain Hydraulics depuis de nombreuses années ; on peut par exemple citer les moteurs vendus sous la dénomination G4 depuis 1982 qui proposaient une telle étanchéité dynamique renforcée en option, ou les moteurs de la gamme MS dont la dénomination comprend la lettre E, par exemple le moteur désigné par le code commercial MS18-0-121-F12-1120-E00 commercialisé depuis mars 1998.

Toutefois, de tels montages conduisent à une élévation de pression progressive entre l'étanchéité dynamique renforcée 5 et le joint à lèvre 4 en raison d'une accumulation de fluide entre l'étanchéité dynamique renforcée 5 et le joint à lèvre 4 en raison de fuites au niveau de l'étanchéité dynamique renforcée 5. Il est par conséquent nécessaire de prévoir un système d'évacuation du fluide qui s'accumule dans ce logement, ce qui est notamment délicat à réaliser dans la mesure où entre ce logement et le carter du moteur se trouve un empilage étanche de composants. D'autre part, dans le cas des moteurs à arbre fixe et carter tournant, le carter n'est pas toujours à une pression nulle et ne permet pas d'éviter toute pression dans le logement.
D'une manière générale, dans de nombreux moteurs ayant une chambre sous pression fermée par le joint dynamique, se trouve la difficulté de devoir traverser un empilage de composants étanches pour évacuer le fluide vers un espace sans pression.

Le document DE 10 2009 014214 divulgue un système comportant un arbre, un carter dans lequel est logé un appareil entraîné par l'arbre et un élément double d'étanchéité incluant une chambre de décharge.

### PRESENTATION DE L'INVENTION

L'invention vise à remédier à cette problématique, et propose à cet effet un système tel que défini en revendication 1 annexée.

En variante, ce système comprend l'une ou plusieurs des caractéristiques suivantes, prises indépendamment ou en combinaison :
- ledit conduit aménagé entre l'appareil hydraulique et l'arbre est une rainure aménagée en périphérie de l'arbre ; de son extrémité distale jusqu'à la chambre de décharge ;
- le système comprend en outre un canal aménagé à l'extrémité distale de l'arbre de manière à réaliser une connexion fluidique entre ledit conduit aménagé entre l'appareil hydraulique et l'arbre et un conduit axial aménagé dans l'arbre ;
- ledit élément d'étanchéité comprend une piste de frottement montée serrée sur l'arbre, sur laquelle est monté le moyen d'étanchéité dynamique basse pression, ladite piste de frottement comprenant un perçage débouchant sur le conduit aménagé sur la surface de l'arbre, de manière à relier la chambre de décharge audit conduit ;
- l'appareil hydraulique est logé dans un carter définissant une pression de carter, et comprend en outre des moyens réalisant une connexion fluidique entre :
   - un second conduit axial aménagé dans l'arbre, débouchant à l'extrémité distale de l'arbre, et
   - le carter,
de manière à permettre la régulation de la pression de carter.

Selon un mode de réalisation particulier, ledit appareil hydraulique est un moteur hydraulique comprenant
- une came multilobes fixée au carter,
- un bloc cylindres placé sur l'arbre en regard de la came,
- des pistons guidés à coulissement radial dans des cylindres respectifs du bloc cylindres et prenant appui sur les lobes de la came, et
- un distributeur destiné à appliquer successivement un fluide sous pression sur les pistons, disposé à l'extrémité distale de l'arbre,
le moyen d'étanchéité réalisant l'étanchéité dynamique entre l'arbre et le logement défini par le carter.
Dans une variante de ce mode de réalisation, ledit canal à l'extrémité distale de l'arbre est aménagé dans l'arbre ou dans le distributeur. Selon une autre variante, un conduit axial traversant est aménagé dans le distributeur, de manière à réaliser la connexion fluidique entre le second conduit axial aménagé dans l'arbre et le carter, indépendamment dudit drain relié à la chambre de décharge.

Selon un autre mode de réalisation, ledit appareil hydraulique est un frein multidisques, comprenant
- une pluralité de disques montés sur un manchon cannelé fixe par rapport à l'arbre,
- une pluralité de disques complémentaires montés fixe en rotation par rapport au carter,
- des moyens de pilotage des disques adaptés pour piloter leur mise en contact,
dans lequel ledit conduit aménagé entre l'appareil hydraulique et l'arbre est une rainure aménagée en périphérie de l'arbre définissant un conduit entre l'arbre et le manchon cannelé, de l'extrémité distale de l'arbre jusqu'à la chambre de décharge.
En variante, ledit conduit aménagé entre l'appareil hydraulique et l'arbre est relié au logement du carter comprenant lesdits disques via une soupape adaptée pour réaliser une décharge de la pression dans ledit logement via ledit conduit lorsque la pression dans ledit logement est supérieure ou égale à une valeur seuil.

L'invention concerne également un système comprenant un arbre présentant une extrémité distale et une extrémité proximale, un carter définissant un logement dans lequel sont disposés un moteur hydraulique et un frein multidisques.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- les figures 1 et 2, décrites précédemment, présentent un système selon l'état de l'art ;
- les figures 3 et 4 illustrent un système selon un aspect de l'invention ;
- les figures 5 et 6 illustrent un système selon un autre aspect de l'invention ;
- la figure 7 illustre une variante du système présenté sur les figures 5 et 6.

Sur l'ensemble des figures, les éléments similaires sont repérés par des références numériques communes.

### DESCRIPTION DETAILLEE

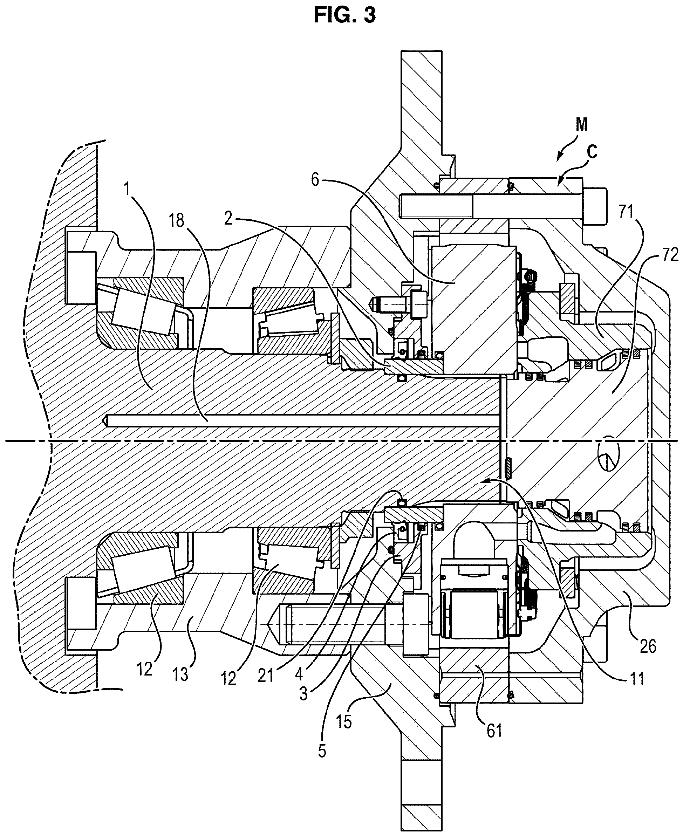

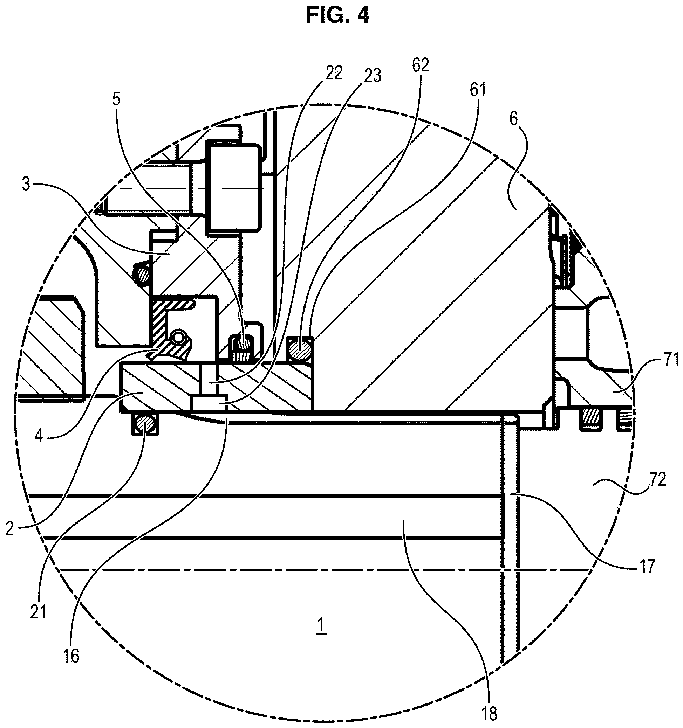

La figure 3 présente un mode de réalisation de système selon un aspect de l'invention ; la figure 4 présente une vue détaillée d'une portion de ce système.
Cette figure présente un arbre 1, présentant une extrémité distale libre sur laquelle est monté un appareil hydraulique, ici un moteur hydraulique M, et une extrémité proximale. L'arbre 1 est muni d'un ou plusieurs roulements 12, ici deux roulement à rouleaux, disposés dans un carter de roulement 13. Un flasque 15 est fixé sur ce carter 13, ce flasque permettant la fixation d'une roue.
Le moteur M comprend également :
- un bloc-cylindres 6 monté en vis-à-vis d'une came 61 multilobes, le bloc-cylindres 6 comprenant une pluralité de logements dans lesquels sont montés coulissant des pistons qui sont adaptés pour se déplacer au contact de la came 61 multilobes,
- un distributeur 7 qui assure la distribution de fluide dans le bloc-cylindres 6, comprenant une contre-glace 72 dans le prolongement de l'arbre 1, et une glace 71 qui entoure la contre glace 72.
Le moteur hydraulique M est logé dans un carter, ici formé du flasque 15, de la came multilobes 61 et d'un couvercle 26. On désignera plus généralement le carter par la référence C.
Comme sur l'ensemble présenté sur la figure 1, l'étanchéité du moteur M est réalisée au moyen d'une piste de frottement 2 montée sur l'arbre 1, sur laquelle est montée une bague porte joint 3 servant de support à un joint à lèvre 4 réalisant l'étanchéité dynamique entre la frette 2 et la bague porte joint, et comprenant une étanchéité dynamique renforcée 5, formée d'un patin 51 et d'un joint torique 52 empilés sur la frette 2 et disposés dans un logement de la bague porte joint 3.
Cette étanchéité dynamique renforcée 5 est disposée de manière à empêcher que le joint à lèvres 4 ne soit directement exposé à un pic de pression dans le moteur M ; elle est donc disposé entre le moteur M et le joint à lèvres 4, de manière à isoler ce joint à lèvres 4 par rapport au moteur M.
Une chambre de décharge est ainsi définie entre le joint à lèvre 4 et l'étanchéité dynamique renforcée 5, délimitée de part et d'autre par la frette 2 et la bague porte joint 3.

L'arbre 1 présente une extrémité distale 11 cannelée, définissant ainsi une ou plusieurs gorges longitudinales 16 sur sa périphérie externe. La frette 2 est montée serrée sur ces cannelures, l'étanchéité entre la frette 2 et l'arbre 1 étant réalisée au moyen d'un joint d'étanchéité statique 21 ; typiquement un joint torique disposé dans une gorge aménagée dans l'arbre 1. Le bloc-cylindres 6 est donc également monté sur cette extrémité cannelée de l'arbre 1.
De plus, dans le mode de réalisation représenté, le bloc-cylindres 6 entoure partiellement la frette 2 ; l'étanchéité entre la frette 2 et le bloc-cylindres 6 est alors réalisée au moyen d'un joint d'étanchéité 62 ; typiquement un joint torique disposé dans un logement 61 aménagé dans le bloc-cylindres 6 en vis-à-vis de la frette 2.
Dans le cas d'un arbre 1 ne présentant pas une extrémité distale 11 cannelée, on peut réaliser une ou plusieurs gorges longitudinales sur la périphérie de l'arbre 1, typiquement par usinage.
Que ce soit en exploitant des cannelures existantes ou en réalisant des gorges longitudinales sur la périphérie de l'arbre 1, on évite ainsi de réaliser des perçages internes à l'arbre, et en particulier des perçages radiaux ou des perçages longitudinaux proches de la périphérie de l'arbre, de tels perçages étant délicats à réaliser et fragilisant les arbres.

La chambre de décharge recueille le fluide en provenance du moteur, qui passe au travers de l'étanchéité dynamique renforcée 5.
Par conséquent, au cours de l'utilisation du moteur hydraulique M, le fluide, typiquement de l'huile, s'accumule dans cette chambre de décharge.

Afin de permettre l'évacuation de ce fluide qui s'accumule dans la chambre de décharge, l'invention propose de la relier à un drain via un conduit aménagé sur la surface de l'arbre, entre le moteur M et l'arbre de manière à évacuer le fluide se trouvant dans la chambre de décharge, ce drain étant isolé du carter et donc du drain de carter 25 comme représenté sur la figure 1.

Dans le mode de réalisation représenté, le drain est réalisé au moyen d'un perçage 22 réalisé dans la frette 2, qui traverse ladite frette 2 de manière à relier la chambre de décharge aux gorges longitudinales 16 définies par l'extrémité cannelée de l'arbre 1. D'autres variantes sont possibles, notamment des variantes combinant un perçage longitudinal et un perçage radial borgnes, qui se rejoignent pour déboucher radialement de la frette 2.
Dans la variante représentée, une gorge 23 est aménagée sur la périphérie interne de la frette 2, dans laquelle débouche le perçage 22. Cette gorge 23 s'étend avantageusement sur toute la périphérie de la frette 2, et réalise ainsi un raccord entre le perçage 22 et les gorges longitudinales 16 définies par l'extrémité cannelée de l'arbre 1 ; c'est-à-dire entre ces gorges longitudinales 16 et la chambre de décharge. Plus généralement, la gorge 23 permet d'augmenter la surface de passage entre le perçage 2 et les gorges longitudinales 16, afin de faciliter le passage du fluide se trouvant dans la chambre de drainage vers les gorges longitudinales 16. Ces gorges longitudinales 16 sont ainsi aménagées entre l'arbre 1 et le moteur hydraulique M monté sur l'arbre 1.
Les gorges longitudinales 16 sont reliées à un premier conduit axial 18 aménagé dans l'arbre 1 via un canal 17 aménagé à l'extrémité distale de l'arbre 1 de manière à réaliser une connexion fluidique entre ledit conduit aménagé entre les gorges longitudinales 16 et le premier conduit axial aménagé 18 dans l'arbre 1.

Le premier conduit axial aménagé 18 dans l'arbre 1 est typiquement relié à un réservoir à pression atmosphérique, formant ainsi un drain pour la chambre de décharge.

La chambre de décharge est ainsi reliée à un réservoir à pression atmosphérique, ce qui permet d'y décharger le fluide qui s'y accumule, tout en étant isolée du carter du moteur M dans lequel la pression est typiquement plus élevée, notamment grâce à l'étanchéité réalisée entre la frette 2 et le bloc-cylindres 6.
Les composants de l'élément d'étanchéité, et plus particulièrement le joint à lèvres 4 sont ainsi protégés à la fois de pics de pression pouvant se produire dans le carter du moteur M, et de hausses de pression qui pourraient intervenir dans la chambre de décharge en l'absence de drain.
L'invention permet ainsi de former un drain pour la chambre de décharge en dépit de l'assemblage étanche de composants formant le moteur M.

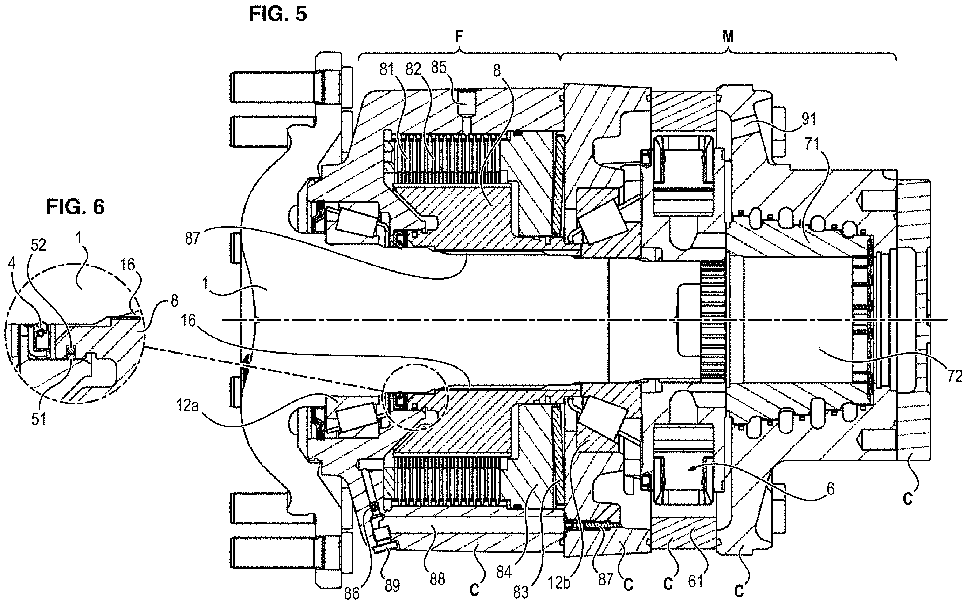

La figure 5 présente un autre mode de réalisation d'un système selon un aspect de l'invention. La figure 6 présente une vue détaillée d'une portion de la figure 5.
Dans le mode de réalisation représenté, un moteur hydraulique M et un frein F sont montés sur un arbre 1 au moyen d'un palier de roulements 12 comprenant deux roulements 12a et 12b, le roulement 12a étant disposé entre le frein F et l'extrémité proximale de l'arbre 1, et le roulement 12b étant disposé entre le frein F et le moteur M ; le moteur hydraulique M et le frein F sont logés dans un carter C, qui est ainsi monté tournant par rapport à l'arbre 1 (ou inversement) via les roulements 12.
De même que sur les figures 3 et 4, le moteur M comprend un bloc-cylindres 6, une came multilobes 61, et un distributeur 7 comprenant une glace 71 et une contre-glace 72 réalisant l'alimentation en fluide du bloc-cylindres 6.

Le frein F comprend :
- une pluralité de disques 81 montés sur un manchon cannelé 8 fixe par rapport à l'arbre 1,
- une pluralité de disques complémentaires 82 montés fixe en rotation par rapport au carter C,
- des moyens de pilotage des disques complémentaires adaptés pour piloter leur mise en contact avec les disques montés sur le manchon ; typiquement une rondelle ressort 83, communément appelée « rondelle Belleville » associée à un piston 84 dont le déplacement est piloté par un orifice de défreinage 85 aménagé dans le carter C pour contrôler l'application d'une pression sur ledit piston 84, ce qui pilote ainsi la mise au contact ou non des disques 81 et 82, et donc le freinage ou non de la rotation du carter C par rapport à l'arbre 1, c'est-à-dire du moteur M par rapport à l'arbre 1 (ou inversement).

Le carter C comprend également des moyens pour réaliser une évacuation de la pression dans le frein F vers le carter du moteur M ; à savoir un gicleur d'irrigation 86 et une soupape d'irrigation 87 reliant le frein F au moteur M.
Le gicleur d'irrigation 86 détermine le débit en provenance du frein F, et plus précisément du logement des disques 81 et 82, qui est acheminé vers la soupape d'irrigation 87. Cette soupape d'irrigation 87 s'ouvre lorsque la pression dans une chambre d'irrigation 88 qui se situe entre le gicleur d'irrigation 86 et la soupape d'irrigation 87 atteint une valeur seuil, pour décharger la pression dans cette chambre d'irrigation 88 vers le carter du moteur M.
Le mode de réalisation représenté illustre également un bouchon 89 qui obture une ouverture de la chambre d'irrigation 88 aménagée dans le carter C, cette ouverture résultant de l'usinage des différents conduits dans le carter C.
Le joint dynamique basse pression 4, ici un joint à lèvre, est ici monté directement sur l'arbre 1 et réalise l'étanchéité dynamique entre l'arbre 1 et le carter C. On peut bien évidemment envisager d'adapter une frette à ce mode de réalisation, comme on l'a présenté sur les figures 3 et 4, de la même manière que l'on peut adapter ce mode de réalisation sans frette au mode de réalisation représenté sur les figures 3 et 4. L'étanchéité dynamique renforcée 5 est ici aménagée entre le carter C et le manchon cannelé 8 ; ce dernier comprenant un logement dans lequel sont logés un patin 51 et un joint torique 52.
Cette étanchéité dynamique renforcée 5 isole le joint dynamique basse pression 4 de la chambre dans laquelle sont logés les disques 81 et 82, de sorte que la pression qui est appliquée dans cette chambre ne détériore pas le joint dynamique 4.

De la même manière que pour le mode de réalisation représenté sur les figures précédentes, l'étanchéité dynamique renforcée 5 et l'étanchéité dynamique basse pression 4 définissent une chambre de décharge, dans laquelle viennent s'accumuler les fuites en provenance du logement des disques 81 et 82.
Cette chambre de décharge est reliée à un drain via un conduit aménagé sur la surface de l'arbre, entre le frein F et l'arbre 1 et entre le moteur M et l'arbre 1, de manière à évacuer le fluide se trouvant dans la chambre de décharge, le drain étant isolé du carter.
Le drain est ici un orifice de drain 91 aménagé dans le carter du moteur M, relié à un réservoir à une pression inférieure à la pression dans le carter du moteur M; typiquement un réservoir à pression atmosphérique.
La liaison entre la chambre de décharge et cet orifice de drain 91 est réalisée au moyen d'une ou plusieurs gorges 16 aménagées sur la surface de l'arbre 1. Dans le cas d'un arbre ayant une portion cannelée, ces gorges peuvent correspondre aux cannelures de l'arbre, par exemple une ou plusieurs cannelures sont la profondeur est augmentée si nécessaire afin d'assurer un débit de fluide suffisant.

Dans le mode de réalisation représenté, les gorges 16 s'étendent sur la périphérie de l'arbre 1 sensiblement jusqu'au roulement 12b du palier de roulements 12.
Le fluide passe ensuite par le roulement 12b et via le carter du moteur M pour rejoindre l'orifice de drain 91.
Ainsi, la chambre de décharge est isolée du logement des disques 81 et 82, et le joint dynamique basse pression 4, n'est donc pas soumis à la pression appliquée via l'orifice de défreinage 85. De plus, l'orifice de drain 91 étant aménagé dans le carter du moteur M, la chambre de décharge n'est pas non plus soumise à des pics de pression qui auraient lieu dans le carter du moteur M, de tels pics de pression se déchargeant alors directement via l'orifice de drain 91.

En variante (non représentée), les gorges 16 s'étendant longitudinalement sur la périphérie de l'arbre 1 peuvent être reliées à un conduit longitudinal aménagé dans l'arbre 1 comme on l'a présenté sur les figures 3 et 4. Les gorges s'étendent alors typiquement jusqu'à l'interface entre l'arbre 1 et la contre-glace 72, et on aménage un canal à l'extrémité distale de l'arbre de manière à réaliser une connexion fluidique entre :
- les gorges longitudinales 16, c'est-à-dire le conduit aménagé entre d'une part le moteur M et le frein F et d'autre part l'arbre 1, et
- le conduit axial aménagé dans l'arbre 1.
On obtient ainsi une fonction similaire au mode de réalisation représenté, c'est-à-dire qu'on réalise une évacuation des fuites qui s'accumulent dans la chambre de décharge via un drain, de sorte que ladite chambre de décharge ne soit pas soumise à la pression régnant dans le carter dans lequel est disposé l'appareil hydraulique, en l'occurrence le frein F et le moteur M.

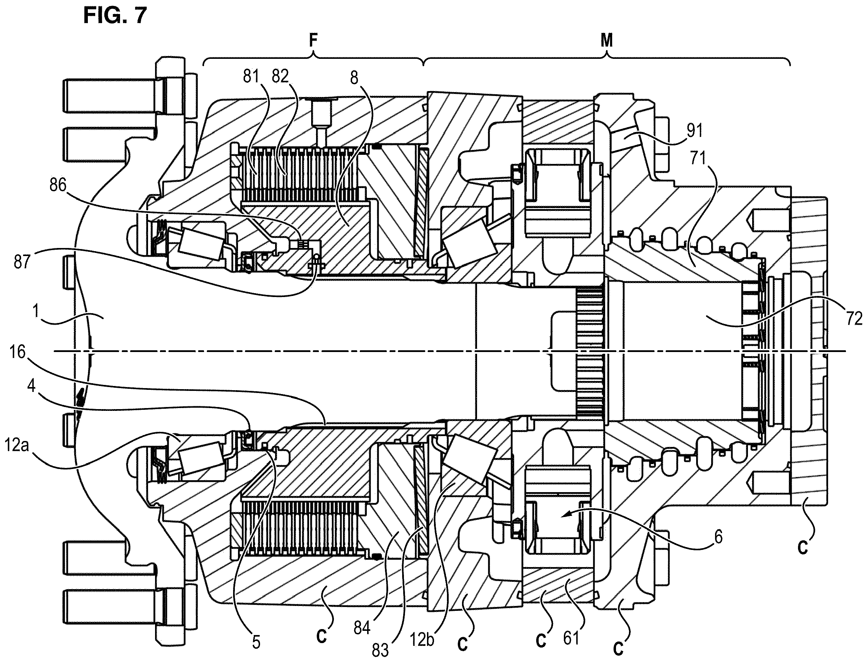

La figure 7 présente une variante du mode de réalisation présenté sur les figures 5 et 6.

On ne décrit ci-après que les différences avec le mode de réalisation précédent.
Dans la variante représentée, le gicleur d'irrigation 86 et la soupape d'irrigation 87 sont disposés dans un conduit aménagé dans le manchon cannelé 8, qui débouche dans les gorges 16 longitudinales aménagées sur la périphérie de l'arbre 1.
Ainsi, au lieu de décharger la pression vers le carter du moteur M comme dans le mode de réalisation représenté sur la figure 5, le gicleur d'irrigation 86 et la soupape d'irrigation 87 permettent de décharger la pression vers le drain via les gorges 16 longitudinales lorsque la pression atteint une valeur suffisamment élevée pour que la soupape d'irrigation 87 s'ouvre.
L'invention permet donc de réaliser un drain pour les fuites qui s'accumulent dans la chambre de décharge entre le moyen d'étanchéité dynamique 4 basse pression et le moyen d'étanchéité dynamique renforcé 5, tout en protégeant cette chambre de décharge et donc en protégeant le moyen d'étanchéité dynamique 4 basse pression des variations de pressions qui peuvent se produire dans le carter du moteur hydraulique M, du frein hydraulique F, ou plus généralement de l'appareil hydraulique considéré.
La chambre de décharge est ainsi mise en connexion fluidique avec un drain typiquement relié à un réservoir à pression ambiante, via des conduits aménagés notamment sur la surface de l'arbre, entre l'appareil hydraulique et l'arbre.

## Revendications

1. Système comprenant :
- un arbre (1) présentant une extrémité distale (11) et une extrémité proximale,
- un carter (C) définissant un logement dans lequel est disposé un appareil hydraulique (M, F) monté tournant sur l'arbre (1),
- deux moyens d'étanchéité (4,5) placés entre le logement dans lequel est disposé l'appareil hydraulique (M, F) et l'arbre (1),
- une chambre de décharge entre les deux moyens d'étanchéité reliée à un drain (18, 91),
**caractérisé en ce que** les deux moyens d'étanchéité comprennent un moyen d'étanchéité dynamique (4) basse pression et un moyen d'étanchéité dynamique renforcé (5) formé d'un joint d'étanchéité statique (51) monté serré sur un patin de frottement (51) entre le logement dans lequel est disposé l'appareil hydraulique (M, F) et le moyen d'étanchéité dynamique (4) basse pression, de manière à isoler ledit moyen d'étanchéité dynamique (4) basse pression de l'appareil hydraulique (M, F) tournant, et la chambre de décharge est reliée au drain (18, 91) via un conduit (16) aménagé sur la surface de l'arbre (1), entre l'appareil hydraulique (M, F) et l'arbre de manière à évacuer le fluide se trouvant dans la chambre de décharge, de sorte que ladite chambre de décharge ne soit pas soumise à la pression régnant dans le carter (C) dans lequel est disposé l'appareil hydraulique (M, F).

2. Système selon la revendication 1, dans lequel ledit conduit (16) aménagé entre l'appareil hydraulique (M, F) et l'arbre (1) est une rainure aménagée en périphérie de l'arbre (1) ; de son extrémité distale (11) jusqu'à la chambre de décharge.

3. Système selon l'une des revendications 1 ou 2, comprenant en outre un canal (17) aménagé à l'extrémité distale (11) de l'arbre (1) de manière à réaliser une connexion fluidique entre ledit conduit 16) aménagé entre l'appareil hydraulique (M, F) et l'arbre (1) et un conduit axial (18) aménagé dans l'arbre (1).

4. Système selon l'une des revendications 1 à 3, dans lequel ledit élément d'étanchéité comprend une piste de frottement (2) montée serrée sur l'arbre (1), sur laquelle est monté le moyen d'étanchéité dynamique (4) basse pression, ladite piste de frottement (2) comprenant un perçage (22, 23) débouchant sur le conduit (16) aménagé sur la surface de l'arbre (1) de manière à relier la chambre de décharge audit conduit (16).

5. Système selon l'une des revendications 1 à 4, dans lequel l'appareil hydraulique (M, F) est logé dans un carter (C) définissant une pression de carter, et comprend en outre des moyens réalisant une connexion fluidique entre :
- un second conduit axial (25) aménagé dans l'arbre (1), débouchant à l'extrémité distale de l'arbre, et
- le carter (C),
de manière à permettre la régulation de la pression de carter (C).

6. Système selon l'une des revendications 1 à 5, dans lequel ledit appareil hydraulique est un moteur hydraulique (M) comprenant
- une came (61) multilobes fixée au carter,
- un bloc cylindres (6) placé sur l'arbre (1) en regard de la came (61),
- des pistons guidés à coulissement radial dans des cylindres respectifs du bloc cylindres (6) et prenant appui sur les lobes de la came (61), et
- un distributeur (71, 72) destiné à appliquer successivement un fluide sous pression sur les pistons, disposé à l'extrémité distale de l'arbre (1),
l'élément d'étanchéité (4,5) réalisant l'étanchéité dynamique entre l'arbre et le logement défini par le carter.

7. Système selon les revendications 4 et 6 prises en combinaison, dans lequel ledit canal (17) à l'extrémité distale de l'arbre (1) est aménagé dans l'arbre (1) ou dans le distributeur (72).

8. Système selon la revendication 5 prise en combinaison avec l'une des revendications 6 ou 7, dans lequel un conduit axial traversant (27) est aménagé dans le distributeur (72), de manière à réaliser la connexion fluidique entre le second conduit axial aménagé dans l'arbre (25) et le carter (1), indépendamment dudit drain (18) relié à la chambre de décharge.

9. Système selon l'une des revendications 1 à 4, dans lequel ledit appareil hydraulique est un frein multidisques (F), comprenant
- une pluralité de disques (81) montés sur un manchon cannelé (8) fixe par rapport à l'arbre (1),
- une pluralité de disques complémentaires (82) montés fixe en rotation par rapport au carter (C),
- des moyens de pilotage (83, 84, 85) des disques (81, 82) adaptés pour piloter leur mise en contact,
dans lequel ledit conduit aménagé entre l'appareil hydraulique et l'arbre est une rainure (16) aménagée en périphérie de l'arbre (1) définissant un conduit entre l'arbre (1) et le manchon cannelé (8), de l'extrémité distale (11) de l'arbre (1) jusqu'à la chambre de décharge.

10. Système selon la revendication 9, dans lequel ledit conduit aménagé entre l'appareil hydraulique (F) et l'arbre (1) est relié au logement du carter comprenant lesdits disques (81, 82) via une soupape (86, 87) adaptée pour réaliser une décharge de la pression dans ledit logement via ledit conduit lorsque la pression dans ledit logement est supérieure ou égale à une valeur seuil.

11. Système comprenant un arbre (1) présentant une extrémité distale (11) et une extrémité proximale, un carter définissant un logement dans lequel est disposé au moins un appareil hydraulique (M, F)
- deux moyens d'étanchéité (4, 5) placés entre le logement dans lequel est disposé ledit au moins un appareil hydraulique (M, F) et l'arbre (1),
- une chambre de décharge entre les deux moyens d'étanchéité reliée à un drain (18, 91),
**caractérisé en ce que** ledit appareil hydraulique comprend un moteur hydraulique (M) et un frein multidisques (F),
le moteur hydraulique (M) comprenant :
- une came multilobes (61) fixée au carter (C),
- un bloc cylindres (6) placé sur l'arbre (1) en regard de la came (61),
- des pistons guidés à coulissement radial dans des cylindres respectifs du bloc cylindres (6) et prenant appui sur les lobes de la came (61), et
- un distributeur (71, 72) destiné à appliquer successivement un fluide sous pression sur les pistons, disposé à l'extrémité distale (11) de l'arbre (1),
le frein multidisques (F) comprenant :
- une pluralité de disques (81) montés sur un manchon cannelé (8) fixe par rapport à l'arbre (1),
- une pluralité de disques (82) complémentaires montés fixe en rotation par rapport au carter (C),
- des moyens de pilotage (83, 84, 85) adaptés pour piloter la mise en contact des disques (81, 82),
les deux moyens d'étanchéité réalisent l'étanchéité entre le frein multidisques et le carter, et comprennent, un moyen d'étanchéité dynamique (4) basse pression et un moyen d'étanchéité dynamique renforcé (5) formé d'un joint d'étanchéité statique (52) monté serré sur un patin de frottement (51), entre le logement dans lequel est disposé l'appareil hydraulique (M, F) et le moyen d'étanchéité dynamique (4) basse pression de manière à isoler ledit moyen d'étanchéité dynamique (4) du moteur (M) et du frein (F), et ledit arbre (1) comprend un conduit (16) aménagé sur sa surface, entre le manchon cannelé (8) et l'arbre (1) reliant la chambre de décharge à un drain (91) de manière à évacuer le fluide se trouvant dans la chambre de décharge, de sorte que ladite chambre de décharge ne soit pas soumise à la pression régnant dans le carter (C) dans lequel sont disposés le moteur (M) et le frein (F).

## Patentansprüche

1. System, umfassend:
- eine Welle (1), die ein distales Ende (11) und ein proximales Ende aufweist,
- ein Gehäuse (C), das eine Aufnahme definiert, in der ein hydraulisches Gerät (M, F) angeordnet ist, das drehbar auf der Welle (1) montiert ist,
- zwei Abdichtmittel (4, 5), die zwischen der Aufnahme, in der das hydraulische Gerät (M, F) und die Welle (1) angeordnet sind, platziert ist
- eine Entlastungskammer zwischen den zwei Abdichtmitteln, die an eine Dränage (18, 91) angeschlossen sind
**dadurch gekennzeichnet, dass** die zwei Abdichtmittel ein dynamisches Niedrigdruck-Abdichtmittel (4) und ein verstärktes dynamisches Abdichtmittel (5) umfassen, das aus einer statischen Dichtung (51) geformt ist, die eingespannt auf einem Reibschuh (51) zwischen der Aufnahme, in der das hydraulische Gerät (M, F) angeordnet ist, und dem dynamischen Niedrigdruck-Abdichtmittel (4) derart eingespannt ist, dass das genannte dynamische Niedrigdruck-Abdichtmittel (4) von dem drehbaren hydraulischen Gerät (M, F) isoliert wird und die Entlastungskammer über eine auf der Oberfläche der Welle (1) angeordnete Leitung (16) zwischen dem hydraulischen Gerät (M, F) und der Welle derart an die Dränage (18, 91) angeschlossen ist, dass das sich in der Entlastungskammer befindende Fluid derart ausgetragen wird, dass die genannte Entlastungskammer keinem Druck unterzogen wird, der in dem Gehäuse (C) herrscht, in dem das hydraulische Gerät (M, F) angeordnet ist.

2. System gemäß Anspruch 1, in dem die genannte Leitung (16), die zwischen dem hydraulischen Gerät (M, F) und der Welle (1) angeordnet ist, eine in der Peripherie der Welle (1) von ihrem distalen Ende (11) bis zur Entlastungskammer angeordnete Rille ist.

3. System gemäß einem der Ansprüche 1 oder 2, umfassend darüber hinaus einen Kanal (17), der am distalen Ende (11) der Welle (1) derart angeordnet ist, dass eine fluidische Verbindung zwischen der genannten Leitung (16), die zwischen dem hydraulischen Gerät (M, F) und der Welle (1) angeordnet ist, und einer axialen Leitung (18), die in der Welle (1) angeordnet ist, realisiert ist.

4. System gemäß einem der Ansprüche 1 bis 3, in dem das genannte Abdichtelement eine auf der Welle (1) eingespannt montierte Reibspur (2) umfasst, auf der das dynamische Niedrigdruck-Abdichtmittel (4) montiert ist, wobei die genannte Reibspur (2) eine Durchbohrung (22, 23) umfasst, die auf die Leitung (16) mündet, die auf der Oberfläche der Welle (1) derart angeordnet ist, dass sie die Entlastungskammer mit der genannten Leitung (16) verbindet.

5. System gemäß einem der Ansprüche 1 bis 4, in dem das hydraulische Gerät (M, F) in einem Gehäuse (C) untergebracht ist, das einen Gehäusedruck definiert, und der darüber hinaus Mittel umfasst, die eine fluidische Verbindung realisieren zwischen:
- einer zweiten axialen Leitung (25), die in der Welle (1) angeordnet ist und am distalen Ende der Welle einmündet, und
- dem Gehäuse (C),
derart, dass die Regulierung des Gehäusedrucks (C) erlaubt wird.

6. System gemäß einem der Ansprüche 1 bis 5, in dem das genannte hydraulische Gerät ein hydraulischer Motor (M) ist, umfassend
- eine mehrkeulige Nocke (61), die am Gehäuse befestigt ist,
- einen Zylinderblock (6) der auf der Welle (1) gegenüber der Nocke (61) befestigt ist,
- geführte Kolben mit radialem Gleiten in jeweiligen Zylindern des Zylinderblocks (6) und die sich auf den Keulen der Nocke (61) aufstützen und
- einen Verteiler (71, 72), der zur sukzessiven Anwendung eines mit Druck beaufschlagten Fluids auf den Kolben bestimmt und am distalen Ende der Welle (1) angeordnet ist,
wobei das Abdichtelement (4, 5) die dynamische Abdeckung zwischen der Welle und der vom Gehäuse definierten Aufnahme realisiert.

7. System gemäß den Ansprüchen 4 und 6 in Kombination, in dem der genannte Kanal (17) am distalen Ende der Welle (1) in der Welle (1) oder in dem Verteiler (72) angeordnet ist.

8. System gemäß Anspruch 5 in Kombination mit einem der Ansprüche 6 oder 7, in dem eine durchquerende axiale Leitung (27) in dem Verteiler (72) derart angeordnet ist, dass die fluidische Verbindung zwischen der in der Welle (25) angeordneten zweiten axialen Leitung und dem Gehäuse (1) unabhängig von der genannten Dränage (18) angeordnet ist, die mit der Entlastungskammer verbunden ist.

9. System gemäß einem der Ansprüche 1 bis 4, in dem das genannte hydraulische Gerät eine mehrscheibige Bremse (F) ist, umfassend
- eine Vielzahl von Scheiben (81), die auf einem geriffelten Stutzen (8) montiert sind, der im Verhältnis zur Welle (1) fest ist,
- eine Vielzahl von komplementären Scheiben (82), die fest in Rotation im Verhältnis zum Gehäuse (C) montiert sind,
- Steuermittel (83, 84, 85) der Scheiben (81, 82), die zur Steuerung ihrer Kontaktaufnahme geeignet sind,
in dem die genannte Leitung, die zwischen dem hydraulischen Gerät und der Welle angeordnet ist, eine Rille (16) ist, die an der Peripherie der Welle (1) angeordnet ist, die eine Leitung zwischen der Welle (1) und dem geriffelten Stutzen (8) von dem distalen Ende (11) der Welle (1) bis zur Entlastungskammer definiert.

10. System gemäß Anspruch 9, in dem die genannte Leitung, die zwischen dem hydraulischen Gerät (F) und der die genannten Scheiben (81, 82) umfassenden Welle (1) angeordnet ist, an die Aufnahme des Gehäuses über ein Ventil (86, 87) angeschlossen ist, das geeignet ist, um eine Entlastung des Drucks in der genannten Aufnahme über die genannte Leitung zu realisieren, wenn der Druck in der genannten Aufnahme größer als oder gleich einem Schwellenwert ist.

11. System, umfassend eine Welle (1), die ein distales Ende (11) und ein proximales Ende aufweist, wobei ein Gehäuse eine Aufnahme definiert, in der wenigstens ein hydraulisches Gerät (M, F) angeordnet ist:
- zwei Abdichtmittel (4, 5), die zwischen der Aufnahme, in der das genannte wenigstens eine hydraulische Gerät (M, F) und die Welle (1) angeordnet ist, platziert sind,
- eine Entlastungskammer zwischen den zwei Abdichtmitteln, die an eine Dränage (18, 91) angeschlossen ist,
**dadurch gekennzeichnet, dass** das hydraulische Gerät einen hydraulischen Motor (M) und eine mehrscheibige Bremse (F) umfasst,
wobei der hydraulische Motor (M) umfasst:
- eine mehrkeulige Nocke (61), die am Gehäuse (C) befestigt ist,
- einen Zylinderblock (6), der auf der Welle (1) gegenüber der Nocke (61) platziert ist,
- geführte Kolben mit radialem Gleiten in jeweiligen Zylindern des Zylinderblocks (6) und die sich auf die Keulen der Nocke (61) aufstützen und
- einen Verteiler (71, 72), der zum sukzessiven Anwenden eines mit Druck beaufschlagten Fluids bestimmt ist und am distalen Ende (11) der Welle (1) angeordnet ist,
wobei die mehrscheibige Bremse (F) umfasst
- eine Vielzahl von Scheiben (81), die auf einem geriffelten Stutzen (8) montiert sind, der im Verhältnis zur Welle (1) fest ist,
- eine Vielzahl von komplementären Scheiben (81), die fest in Rotation im Verhältnis zum Gehäuse (C) montiert sind,
- Steuermittel (83, 84, 85), die geeignet sind, um die Kontaktaufnahme der Scheiben (81, 82) zu steuern,
wobei die zwei Abdichtmittel die Abdichtung zwischen der mehrscheibigen Bremse und dem Gehäuse realisieren und ein dynamisches Niedrigfrequenz-Abdichtmittel (4) und ein verstärktes dynamisches Mittel (5) umfassen, das aus einer statischen Abdichtung (52), das eingespannt auf einem Reibschuh (51) zwischen der Aufnahme montiert ist, in der das hydraulische Gerät (M, F) und das dynamische Abdichtmittel (4) derart angeordnet sind, dass das genannte dynamische Abdichtmittel (4) des Motors (M) und der Bremse (F) geformt ist, und wobei die genannte Welle (1) eine auf ihrer Oberfläche (16) zwischen dem geriffelten Stutzen (8) und der die Entlastungskammer mit einer Dränage (91) derart verbindenden Welle (1) angeordnete Leitung (16) umfasst, dass das Fluid, das sich in der Entlastungskammer befindet, derart ausgetragen wird, dass die genannte Entlastungskammer nicht mit dem Druck beaufschlagt ist, der in dem Gehäuse (C) herrscht, in dem der Motor (M) und die Bremse (F) angeordnet sind.

## Claims

1. A system comprising:
- a shaft (1) having a distal end (11) and a proximal end,
- a casing (C) defining a housing in which a hydraulic device (M, F) is disposed, rotatably mounted on the shaft (1),
- two sealing means (4, 5) placed between the housing in which the hydraulic device (M, F) is disposed and the shaft (1),
- a discharge chamber between both sealing means interconnected to a drain (18, 91),
**characterised in that** both sealing means comprise a low pressure dynamic sealing means (4) and a reinforced dynamic sealing means (5) which is formed by a static seal (51) tightly mounted on a friction pad (51) between the housing in which the hydraulic device (M, F) is disposed and the low pressure dynamic sealing means (4), so as to isolate said low pressure dynamic sealing means (4) from the rotating hydraulic device (M, F), and the discharge chamber is interconnected to the drain (18, 91) via a duct (16) fitted on the surface of the shaft (1), between the hydraulic device (M, F) and the shaft so as to discharge the fluid being in the discharge chamber, so that said discharge chamber is not submitted to the pressure present in the casing (C) in which the hydraulic device (M, F) is disposed.

2. The system according to claim 1, wherein said duct (16) fitted between the hydraulic device (M, F) and the shaft (1) is a groove fitted on the rim of the shaft (1); from the distal end (11) thereof to the discharge chamber.

3. The system according to one of claims 1 and 2, further comprising a channel (17) fitted at the distal end (11) of the shaft (1) so as to perform a fluid connection between said duct (16) fitted between the hydraulic device (M, F) and the shaft (1) and an axial duct (18) fitted in the shaft (1).

4. The system according to one of claims 1 to 3, wherein said sealing element comprises a friction track (2) tightly mounted on the shaft (1), on which track the low pressure dynamic sealing means (4) is mounted, said friction track (2) comprising a drilling (22, 23) leading to the duct (16) fitted on the surface of the shaft (1) so as to interconnect the discharge chamber to said duct (16).

5. The system according to one of claims 1 to 4, wherein the hydraulic device (M, F) is housed in a casing (C) defining a casing pressure, and further comprises means performing a fluid connection between:
- a second axial duct (25) fitted in the shaft (1), leading to the distal end of the shaft, and
- the casing (C),
so as to enable the casing (C) pressure to be regulated.

6. The system according to one of claims 1 to 5, wherein said hydraulic device is a hydraulic motor (M) comprising
- a multiple lobe cam (61) attached to the casing,
- a cylinder block (6) placed on the shaft (1) facing the cam (61),
- radially sliding guided pistons in the respective cylinders of the cylinder block (6) and bearing against the lobes of the cam (61), and
- a distributor (71, 72) for successively applying a pressurised fluid on the pistons, which is disposed at the distal end of the shaft (1),
the sealing element (4, 5) performing the dynamic sealing between the shaft and the housing defined by the casing.

7. The system according to claims 4 and 6 taken in combination, wherein said channel (17) at the distal end of the shaft (1) is fitted in the shaft (1) or in the distributor (72).

8. The system according to claim 5 taken in combination with one of claims 6 and 7, wherein a through axial duct (27) is fitted in the distributor (72), so as to perform the fluid connection between the second axial duct fitted in the shaft (25) and the casing (1), independently of said drain (18) interconnected to the discharge chamber.

9. The system according to one of claims 1 to 4, wherein said hydraulic device is a multiple disk brake (F), comprising
- a plurality of disks (81) fixedly mounted on a splined sleeve (8) relative to the shaft (1),
- a plurality of complementary disks (82) fixedly and rotatably mounted relative to the casing (C),
- driving means (83, 84, 85) for the disks (81, 82) adapted to drive their contacting,
wherein said duct fitted between the hydraulic device and the shaft is a groove (16) fitted on the rim of the shaft (1) defining a duct between the shaft (1) and the splined sleeve (8), from the distal end (11) of the shaft (1) to the discharge chamber.

10. The system according to claim 9, wherein said duct fitted between the hydraulic device (F) and the shaft (1) is interconnected to the housing of the casing comprising said disks (81, 82) via a valve (86, 87) adapted to perform a pressure relief in said housing via said duct when the pressure in said housing is higher than or equal to a threshold value.

11. The system comprising a shaft (1) having a distal end (11) and a proximal end, a casing defining a housing in which at least one hydraulic device (M, F) is disposed
- two sealing means (4, 5) placed between the housing in which said at least one hydraulic device (M, F) is disposed and the shaft (1),
- a discharge chamber between both sealing means interconnected to a drain (18, 91),
**characterised in that** said hydraulic device comprises a hydraulic motor (M) and a multiple disk brake (F),
the hydraulic motor (M) comprising:
- a multiple lobe cam (61) attached to the casing (C),
- a cylinder block (6) placed on the shaft (1) facing the cam (61),
- radially sliding guided pistons in respective cylinders of the cylinder block (6) and bearing against the lobes of the cam (61), and
- a distributor (71, 72) for successively applying a pressurised fluid on the pistons, which is disposed at the distal end (11) of the shaft (1),
the multiple disk brake (F) comprising:
- a plurality of disks (81) fixedly mounted on a splined sleeve (8) relative to the shaft (1),
- a plurality of complementary disks (82) fixedly and rotatably mounted relative to the casing (C),
- driving means (83, 84, 85) adapted to drive contacting of the disks (81, 82),
both sealing means perform a sealing between the multiple disk brake and the casing, and comprise a low pressure dynamic sealing means (4) and a reinforced dynamic sealing means (5) formed by a static seal (52) tightly mounted on a friction pad (51), between the housing in which the hydraulic device (M, F) is disposed and the low pressure dynamic sealing means (4) so as to isolate said dynamic sealing means (4) from the motor (M) and the brake (F), and said shaft (1) comprises a duct (16) fitted on the surface thereof, between the splined sleeve (8) and the shaft (1) interconnecting the discharge chamber to a drain (91) so as to discharge the fluid being in the discharge chamber, so that said discharge chamber is not submitted to the pressure present in the casing (C) in which the motor (M) and the brake (F) are disposed.
